# EUROPÄISCHE PATENTANMELDUNG

(11) **EP 1 033 337 A1**
(43) Veröffentlichungstag der Anmeldung: **06.09.2000**
(21) Anmeldenummer: 00102500.6
(22) Anmeldetag: 05.02.2000
(51) Int. Cl.: B65G 47/14

(54) **Vorrichtung zum Vereinzeln und Zuführen von kreisrunden, scheibenförmigen Werkstücken, insbesondere Münzen**

(30) Priorität: 03.03.1999 DE 29903812 U
(71) Anmelder: Tür & Tor Technik GmbH, 21079 Hamburg (DE)
(72) Erfinder: Zander, Jochen, Dipl.-Ing., 21224 Rosengarten (DE)
(74) Vertreter: von Raffay, Vincenz, Dipl.-Ing.

(57) **Zusammenfassung**

Die Vorrichtung zum Vereinzeln und Zuführen von kreisrunden, scheibenförmigen Werkstücken, insbesondere Münzen weist ein Gehäuse auf, an dem ein Bunker zur Aufnahme der Werkstücke und eine, eine schiefe Ebene bildende, drehangetriebene Mitnahmescheibe mit Mitnahmeschächten für einzelne Werkstücke angeordnet sind. Die an die Mitnahmescheibe angrenzende Fläche des Bunkers ist offen. Damit die Vorrichtung zuverlässig und mit großer Geschwindigkeit die in den Bunker eingegebenen Werkstücke, beispielsweise Münzen unterschiedlichster Größe und aus unterschiedlichsten Materialien, vereinzelt, damit diese anschließend gezählt und sortiert werden können, ist der Bunker 2 mit der Mitnahmescheibe 3 in gleicher Drehrichtung angetrieben und der der Werkstückdicke angepaßte Spalt zwischen der offenen Fläche des Bunkers und der Mitnahmescheibe ist bis auf ein Auswurffenster 5.1 bis 5.2 durch ein Band begrenzt. Zwischen Bunker und Mitnahmescheibe, die vorzugsweise eine bauliche und gemeinsam angetriebene Einheit bilden, findet eine Relativbewegung nicht statt. Diese Relativbewegung besteht nur im Verhältnis zu den Werkstücken. Hierdurch wird für eine schnelle und zuverlässige Vereinzelung gesorgt.

## Beschreibung

Die Erfindung betrifft eine Vorrichtung nach dem Oberbegriff des Anspruches 1.

Aus dem deutschen Gebrauchsmuster 297 07 273.0 ist eine Vorrichtung der eingangs genannten Art bekannt, die relativ einfach ausgebildet ist. Der Bunker ist ortsfest, d.h. er ist mit dem Gehäuse verbunden. Die Mitnahmescheibe weist den mitzunehmenden Werkstücken angepaßte Mitnahmeöffnungen oder -schächte auf. Die Mitnahmescheibe ist so schräg gestellt, d.h. sie bildet eine schiefe Ebene, daß die Werkstücke, vorzugsweise Münzen, aus dem Bunker in die Mitnahmeschächte fallen und so vereinzelt und einer Zähl- und/oder Sortiereinrichtung zugeführt werden.

Der Erfindung liegt nun die Aufgabe zugrunde, eine Vorrichtung der eingangs genannten Art zu schaffen, die zuverlässig und mit großer Geschwindigkeit die in den Bunker eingegebenen Werkstücke, beispielsweise Münzen unterschiedlichster Größe und aus unterschiedlichsten Materialien, vereinzelt, damit diese anschließend gezählt und sortiert werden können.

Diese Aufgabe wird grundsätzlich durch das Kennzeichen des Anspruches gelöst.

Erfindungsgemäß dreht sich der Bunker mit der Mitnahmescheibe, vorzugweise bilden diese eine bauliche und gemeinsam angetriebene Einheit, so daß zwischen diesen beiden Teilen eine Relativbewegung nicht vorhanden ist. Diese Relativbewegung besteht nur im Verhältnis zu den Werkstücken.

Der Spalt zwischen der offenen Fläche des Bunkers und der Mitnahmescheibe, der bis auf ein Auswurffenster verschlossen ist, damit die Werkstücke dort ausgeworfen werden, wo es gewünscht wird, wird durch ein Band begrenzt, das in besonders vorteilhafter Weise so ausgebildet ist, wie in Anspruch 3 angegeben.

Wenn das Band, wie in Anspruch 2 definiert, mit dem Gehäuse verbunden, d.h. ortstfest ist, dann wird auf die Werkstücke ein entsprechender Drall übertragen.

In vielen Anwendungsfällen ist es aber von Vorteil, die Relativbewegung zwischen dem Band und den übrigen Bauteilen der Vorrichtung, die mit den Werkstücken in Berührung gelangen, zu vermeiden, um für eine gleichmäßige und einheitliche Beeinflussung der Werkstücke zu sorgen.

In vorteilhafter Weise ist die Vorrichtung so ausgebildet, wie in den Ansprüchen 5 bis 7 unter Schutz gestellt.

Im folgenden wird die Erfindung unter Hinweis auf die Zeichnung anhand verschiedener Ausführungsbeispiele näher erläutert.

Es zeigt:
- Fig. 1: eine perspektivische Ansicht einer ersten Ausführungsform einer Vorrichtung nach der Erfindung;
- Fig. 2: eine der Fig. 1 entsprechende Ansicht, jedoch mit abgenommenem Bunker;
- Fig. 3: einen Längsschnitt durch die Ausführungsform nach den Fig. 1 und 2;
- Fig. 4: eine perspektivische Ansicht ohne Bunker einer anderen Ausführungsform, insbesondere mit einer anderen Auslaufschiene;
- Fig. 5: eine Draufsicht auf die Ausführungsform nach Fig. 1 bis 3;
- Fig. 6: eine perspektivische Ansicht, die derjenigen der Fig. 2 entspricht, jedoch eine Ausführungsform mit einem den Spalt begrenzenden Band zeigt, das ortsfest ist; und
- Fig. 7: eine Einzelheit der Fig. 3 zur Veranschaulichung der Mitnahme eines Werkstückes aufgrund der Schrägstellung der Mitnahmescheibe.

In der Zeichnung sind gleiche Teile mit gleichen Bezugszeichen versehen.

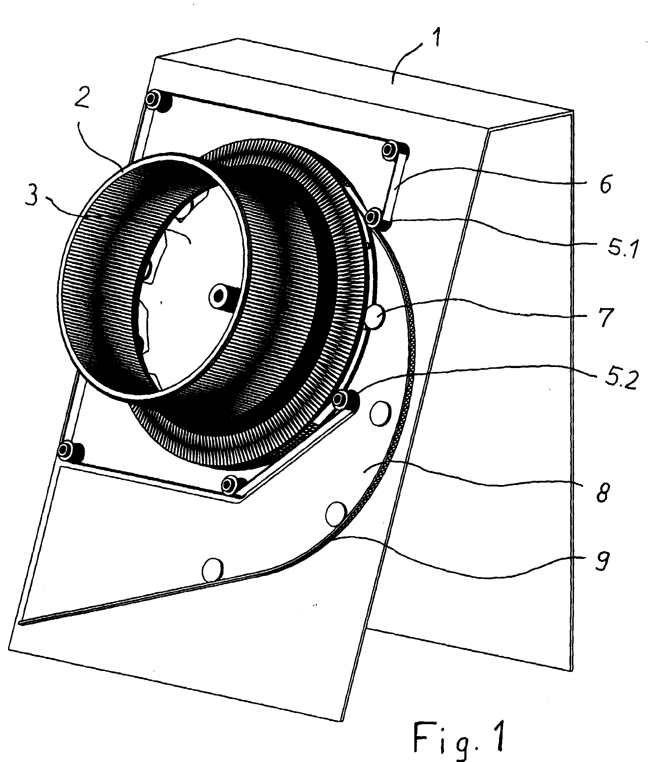

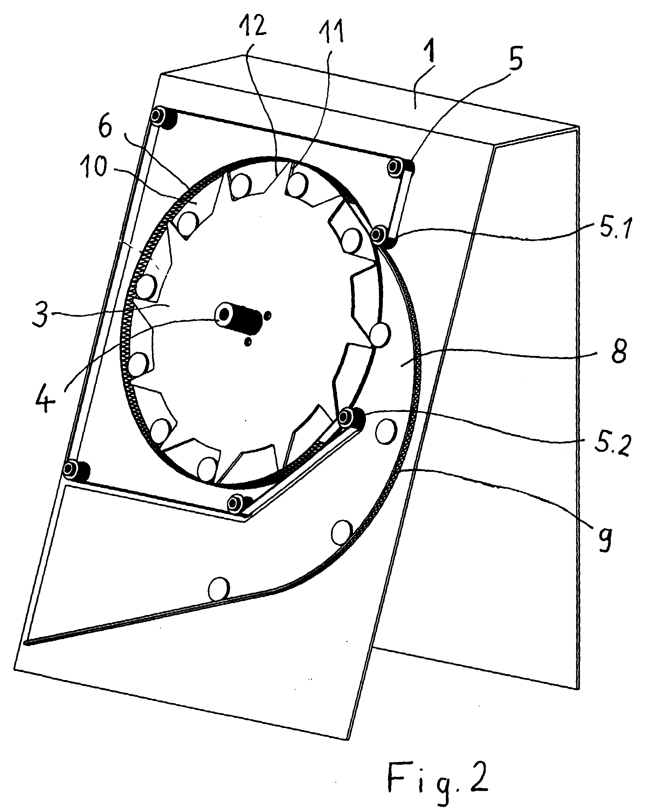

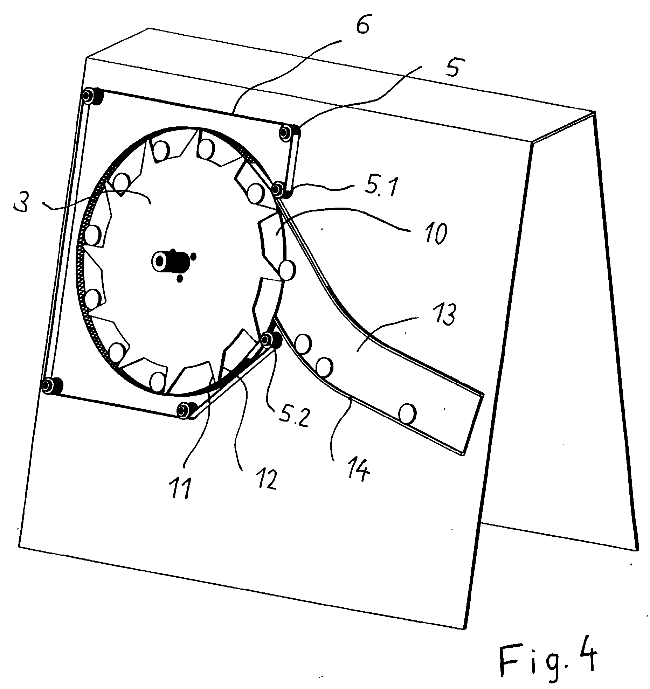

Die in den Fig. 1, 3, 4 und 5 dargestellte Ausführungsform besteht aus einem Gehäuse 1, dessen Vorderseite geringfügig nach hinten geneigt ist. Parallel zu dieser Vorderseite ist eine Mitnahmescheibe 3 angeordnet, die eine Antriebswelle 4 aufweist. Ein Antriebsmotor setzt die Mitnahmescheibe 3 in Drehbewegung. Auf die Mitnahmescheibe 3 ist ein trichterförmiger Bunker 2 aufgesetzt, wie sich deutlich beim Betrachten der Fig. 1 und 3 ergibt. In Fig. 2 fehlt dieser Bunker.

Bei dieser Ausführungsform ist der Spalt zwischen dem Bunker 2 und der Mitnahmescheibe 3, der so breit sein muß, daß die Werkstücke hindurchpassen, durch ein endloses Band verschlossen bis auf ein Auswurffenster, das zwischen den Umlenkrollen 5.1 und 5.2 liegt. Das Band 6 läuft um Umlenkrollen 5 um und wird zusammen mit dem Bunker 3. und der Mitnahmescheibe 3 in gleicher Drehrichtung und vorzugsweise in gleicher Drehgeschwindigkeit angetrieben. Durch diese gemeinsame Drehbewegung fehlt es an einer Relativbewegung zwischen diesen Bauteilen. Eine Relativbewegung erfolgt nur im Verhältnis zu den Werkstücken, beispielsweise Münzen, die durch die Einfüllöffnung in den trichterförmigen Bunker 1 eingeworfen werden.

An das Auswurffenster zwischen den Umlenkrollen 5.1 und 5.2 schließt sich eine Auslautschiene 8 mit einem Rand 9 an, der die ausgeworfenen Werkstücke aufnimmt oder auffängt. Vorzugsweise beginnt der Rand 9 an der Umlenkrolle 5.1 tangential, so daß die ausgeworfenen Werkstücke entsprechend sanft und ohne nennenswerte Stöße aufgenommen und in die gewünschte Richtung umgelenkt werden.

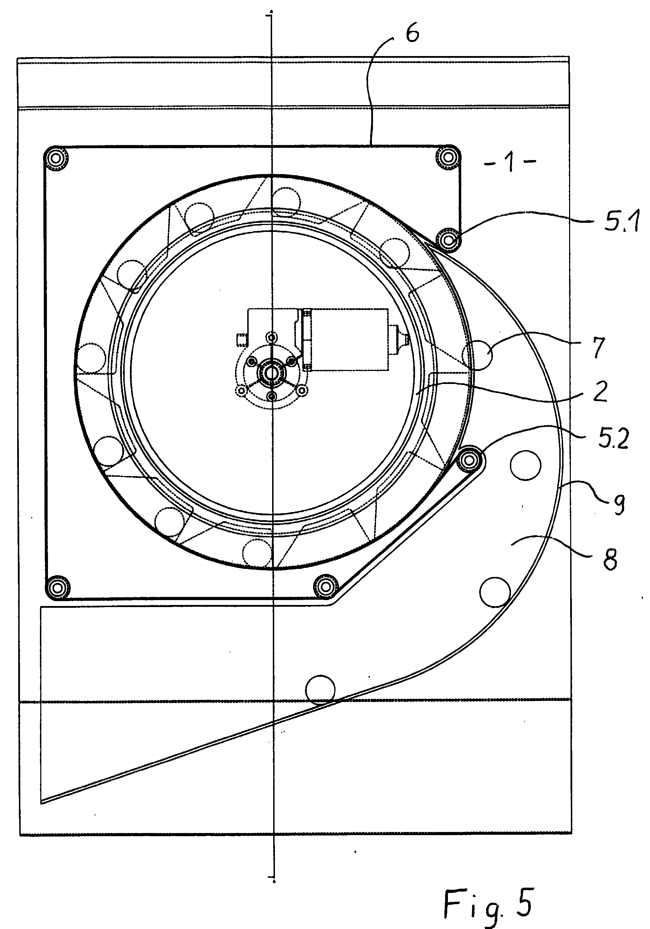

In der Mitnahmescheibe 3 befinden sich eine Anzahl von Mitnahmeschächten 10, die so geformt sind, wie es sich beim Betrachten der Fig. 2 und 5 ergibt. Die in Drehrichtung vorne liegende Kante, die als Auslaufkante 12 bezeichnet wird, ist stärker geneigt als die hinten liegende Kante, die als Mitnahmekante 11 bezeichnet wird. Durch diese Ausbildung wird die Mitnahme und das Auswerten so beeinflußt, wie es für einen reibungslosen Betrieb wünschenswert ist.

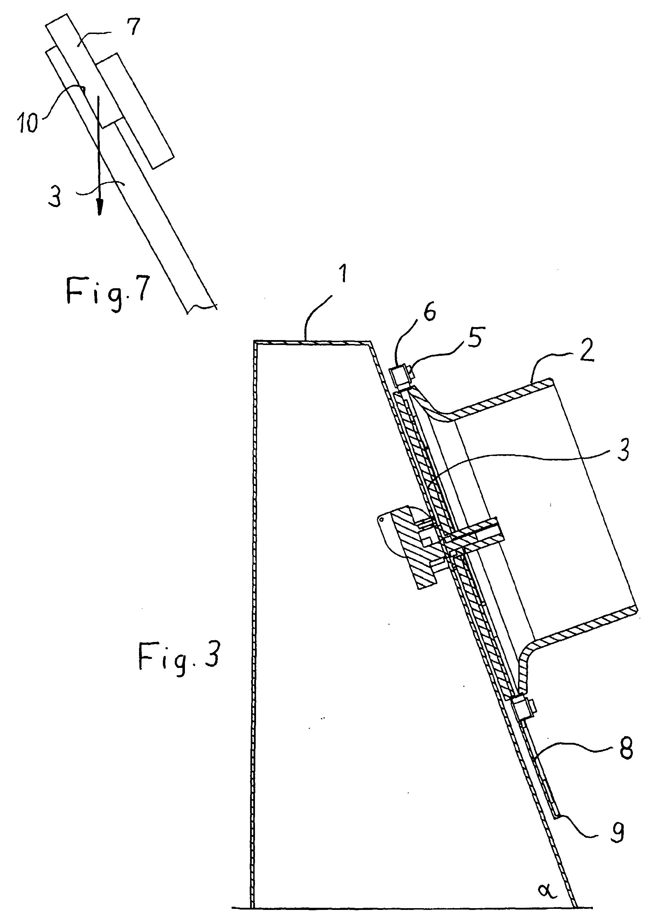

In Fig. 7 ist eine Einzelheit dargestellt. Es ist die Mitnahinescheibe 3 mit einem Mitnahmeschacht 10 erkennbar. Ein Werkstück, d.h. eine Münze, die mitgenommen ist, ist mit 7 bezeichnet. Die der Mitnahmescheibe 3 abgelegene Münze wird nicht mitgenommen. Der gezeigte Schwerkraftvektor macht deutlich, daß bedingt durch die Tiefe des Mitnahmeschachtes und die Neigung der Mitnahmescheibe 3 ein Werkstück 7 sicher mitgenommen, ein zweites Werkstück aber in dem Bunker verbleibt.

Bei der Ausführungsform nach Fig. 4 ist die Auslaufschiene 13 anders ausgebildet, d.h. sie hat einen anderen Verlauf. Der Auslaufrand ist mit 14 bezeichnet. Die Auslaufschiene wird je nach Werkstück, d.h. nach spezifischem Gewicht und Größe diesen Parametern angepaßt.

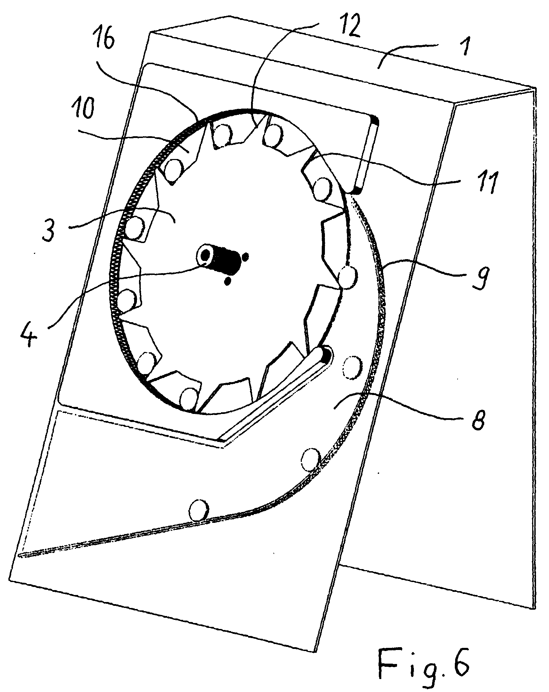

In Fig. 6 ist eine Ausführungsform dargestellt, bei der der Rand 16 nicht umläuft, sondern ortsfest ist. Hierdurch sind die Mitnahme- und Relativbewegungsverhältnisse andere. Bei dieser Ausführungsform handelt es sich um eine vereinfachte Variante, die insbesondere bei nicht so hohen Anforderungen als langsam laufenden Vorrichtung zum Einsatz kommen kann. Bei dieser Ausführungsform bringen Radien- oder Fertigungsfehler und -ungenauigkeiten nur geringe Störkomponenten in das Transportgut. Das ortsfeste Band 16 kann praktisch Teil des ortsfesten Randes 9 sein.

Im Betrieb werden eine Anzahl von Werkstücken, beispielsweise Münzen, in den trichterförmigen Bunker 2 eingefüllt. Aufgrund der Schrägstellung verbleiben diese Werkstücke in dem Bunker, d.h. sie fallen aus der Einfühlöffnung nicht wieder heraus. Die Werkstücke gelangen aufgrund ihrer Schwerkraftwirkung an der Mitnahmescheibe 3 zur Anlage und werden bedingt durch die Drehbewegung nach und nach von den Mitnahmeschächten 10 aufgenommen und nach oben transportiert. Wenn der höchste Punkt überwunden ist, werden sie an dem Auswurffenster zwischen 5.1 und 5.2 ausgeworfen, und zwar je nach Umfangsgeschwindigkeit, Gewicht und Größe, mehr oder weniger durch Zentrifugalkraft oder durch Schwerkraft bzw. durch diese beiden Kräfte. Sie gelangen in die Auslaufschiene 8 und dort auf den Rand 9. Sie laufen auf dem Rand 9 zu einer Zähl- und Sortiervorrichtung.

## Patentansprüche

1. vorrichtung zum Vereinzeln und Zuführen von kreisrunden, scheibenförmigen Werkstücken, insbesondere Münzen, mit einem Gehäuse, an dem ein Bunker zur Aufnahme der Werkstücke und eine, eine schiefe Ebene bildende, drehangetriebene Mitnahmescheibe mit Mitnahmeschächten für einzelne Werkstücke angeordnet sind, wobei die an die Mitnahmescheibe angrenzende Fläche des Bunkers offen ist, dadurch gekennzeichnet, daß der Bunker (2) mit der Mitnahmescheibe (3) in gleicher Richtung drehangetrieben ist und daß der der Werkstückdicke angepaßte Spalt zwischen der offenen Fläche des Bunkers und der Mitnahmescheibe bis auf ein Auswurffenster (5.1 - 5.2) durch ein Band begrenzt ist.

2. vorrichtung nach Anspruch 1, dadurch gekennzeichnet, daß das Band (16) an dem ortsfesten Gehäuse (1) befestigt ist.

3. Vorrichtung nach Anspruch 1, dadurch gekennzeichnet, daß das Band als endloses Band (6) ausgebildet ist, das in Drehrichtung der Mitnahmescheibe (3) und des Bunkers (7) angetrieben ist, bzw. mit diesen umläuft.

4. Vorrichtung nach Anspruch 1, 2 oder 3, dadurch gekennzeichnet, daß die Mitnahmescheibe (3) und der Bunker (2) einen gemeinsamen Antrieb aufweisen.

5. Vorrichtung nach einem oder mehreren der vorstehenden Ansprüche, dadurch gekennzeichnet, daß die Tiefe jedes Mitnahmeschachtes (10) in der Mitnahmescheibe (3) geringer ist als die Dicke der Werkstücke (7), und
daß die Schrägstellung (schiefe Ebene) der Mitnahmescheibe (3) derart ist, daß das mitgenommene Werkstück (7) durch die ausgeübte Schwerkraft in dem entsprechenden Mitnahmeschacht verbleibt.

6. Vorrichtung nach einem oder mehreren der vorstehenden Ansprüche, dadurch gekennzeichnet, daß Form und Neigung der Auslaufkante (12) jedes Mitnahmeschachtes (10) der Form und der Lage des durch das Band freigelassenen Auswurffensters (5.1 - 5.2) angepaßt ist.

7. Vorrichtung nach einem oder mehreren der vorstehenden Ansprüche, dadurch gekennzeichnet, daß der das ausgeworfene Werkstück (7) aufnehmende Rand (9) einer sich an das Auswurftenster (5.1 -5.2) anschließenden Auslauf schiene(8)angrenzend an den Beginn des Auslauffenster (bei 5.1) tangential zu dem Band verläuft.
